# EUROPÄISCHE PATENTSCHRIFT

(11) **EP 3 514 552 B1**
(45) Veröffentlichungstag und Bekanntmachung des Hinweises auf die Patenterteilung: **17.01.2024**
(21) Anmeldenummer: 18210726.8
(22) Anmeldetag: 06.12.2018
(51) Int. Cl.: G01P 15/18, G01M 1/14

(54) **SENSORVORRICHTUNG, SENSORANORDNUNG, SENSORSYSTEM SOWIE EINE VERWENDUNG DER SENSORVORRICHTUNG UND DER SENSORANORDNUNG**
SENSOR DEVICE, SENSOR ARRANGEMENT, SENSOR SYSTEM AND A USE OF THE SENSOR DEVICE AND SENSOR ARRANGEMENT
DISPOSITIF CAPTEUR, AGENCEMENT DE CAPTEUR, SYSTÈME DE CAPTEUR AINSI QU'UTILISATION DU DISPOSITIF CAPTEUR ET DE L'AGENCEMENT DE CAPTEUR

(30) Priorität: 19.01.2018 DE 102018101187
(43) Veröffentlichungstag der Anmeldung: 24.07.2019
(73) Patentinhaber: MML Solutions GmbH, 46487 Wesel (DE)
(72) Erfinder: Mtauweg, Samer, 27568 Bremerhaven (DE); Meimann, Valentin, 48429 Rheine (DE)
(74) Vertreter: advotec.

(56) Entgegenhaltungen:
- DE-A1-102014 116 527
- JP-A- 2001 083 224
- JP-A- 2017 161 476
- US-A- 5 101 669
- US-A1- 2015 352 679

## Beschreibung

Die Erfindung betrifft eine Sensorvorrichtung, eine Sensoranordnung, ein Sensorsystem sowie die Verwendung derselben zur Ermittlung einer Zustandsdiagnose und/oder zur Erstellung einer dynamischen Analyse eines rotationsfähigen Bauteils und/oder des zugehörigen Systems und der Umgebungsbedingungen.

### Bekannter Stand der Technik

Bei der Zustandsdiagnose eines Antriebssystems oder insbesondere von dessen Komponenten bzw. dessen rotationsfähigen Bauteilen, wie beispielsweise Zahnrädern oder Wellen, werden zur Analyse der entsprechenden Komponenten bislang Sensoren eingesetzt, die an einer separaten, feststehenden Komponente angeordnet sind. Meist werden die Schwingungssignale an einem Gehäuse aufgenommen. Diese Signale werden in der Abhängigkeit der Betriebsweise des Systems (mit fester Drehzahl oder drehzahlvariabel) ohne oder mit dem Drehzahlsignal analysiert, um mögliche Auffälligkeiten an einer Komponente zu erkennen (mittels Eigenfrequenz- und/oder Anregungsfrequenzanalyse), wobei derartige Auffälligkeiten beispielsweise unerwünschte Resonanzen, Schäden oder sonstige Mängel wie Unwuchten oder andere unerwünschte Schwingungen sein können. Die Analyse kann über eine gesamte Lebensdauer eines Systems oder aber auch nur temporär erfolgen.

Bisher werden zur Zustandsdiagnose Sensoren zum Messen von Schwinggeschwindigkeit und/oder Beschleunigung zur Erfassung von Frequenzen verwendet, wobei aufgrund mehrerer Messstellen eine große Anzahl dieser Sensoren nötig ist, um sichere Rückschlüsse auf den Zustand der Systems zu treffen. Zudem messen bisherige Sensoren üblicherweise nur in zwei Raumrichtungen, was mehrere Sensoren nötig macht, um eine raumbezogene Aussage zum Zustand des Bauteils zu treffen. Es sind auch triaxial messende Sensoren bekannt, welche entweder ausschließlich Piezosensoren oder MEMS-Sensoren (Micro-Electro-Mechanical-System) aufweisen. Diese Sensoren sind an feststehenden strukturellen Komponenten befestigt, wobei hier eine Auswertintelligenz in dem Sensor fehlt. Zudem können diese aufgrund der Anordnung keine Drehzahlen berechnen. Diese triaxialen Sensoren liefern jedoch bauartbedingt und messstellenbedingt keine umfassenden Bauteilinformationen. Die Eigenfrequenzen, die Anregung der Eigenschwingung und die kinematische Frequenz sind abhängig von der Drehzahl des Bauteils, weshalb zudem auch die Drehzahl erfasst werden muss, um eine aussagekräftige Zustandsdiagnose fällen und/oder eine dynamische Analyse durchführen zu können. Hierzu werden üblicherweise optische Sensoren verwendet, welche wiederum an anderen Messstellen angeordnet sind.

Ein Nachteil der bisherigen Messung ist darin zu sehen, dass diese an den feststehenden strukturellen Komponenten - wie einem Gehäuse - erfolgt, was zwangsläufig zusätzliche Herausforderungen durch die vorhandenen Eigenfrequenzen dieser Komponenten verursacht. Dadurch wird die Zustandsdiagnose trotz der Anwendung von unterschiedlichen Filtermöglichkeiten erschwert. Einerseits übertönen die Eigenfrequenzen der strukturellen Komponenten die gesuchten Schadenfrequenzen, so dass ein klares Definieren oder Herausfiltern einer schadensanzeigenden Frequenz schwierig ist. Andererseits unterdrückt die eigene Dämpfung der feststehenden strukturellen Komponente die Anregungspegel der gesuchten Schadenfrequenzen von den zu analysierenden und rotationsfähigen Bauteilen.

Um nicht nur die Schwingungen eines Bauteils zu analysieren, sondern auch deren Ursache zu ermitteln, sind aus dem Stand der Technik beispielsweise Sensoranordnungen bekannt, welche zur Beschleunigungsmessung eines zu analysierenden Bauteils einen Beschleunigungssensor in einem Gehäuse sowie einen Abstandssensor in einem separaten Gehäuse zur Luftspaltmessung in einer elektrischen Maschine, wie einem Generator, vorsehen. Dort soll ein Luftspalt zwischen Läufer und Stator gemessen werden. Eine ungleiche Luftspaltgröße über eine Umdrehung des Bauteils führt zu dynamischen Problemen der elektrischen Maschine, unerwünschten Schwingung und unerwünschten Geräuschemissionen. Bisherige Sensoranordnungen sind zwar für die Ermittlung der Lage des ungleichen Luftspalts geeignet- allerdings ist dazu eine separate synchrone Messung des Drehwinkels vermittels eines zusätzlichen, separaten Sensors nötig. Weiterer Stand der Technik ist den Druckschriften JP 2001 083224 A1, JP 2017 161476 A1, DE 10 2014 116527 A1, US 5 101 669 A1, und US 2015 / 0 352 679 A1 zu entnehmen.

Der Erfindung liegt daher die Aufgabe zugrunde, eine Sensorvorrichtung, eine Verwendung der Sensorvorrichtung, eine Sensoranordnung und ein Sensorsystem zu schaffen, welche die Probleme des Standes der Technik überwinden, insbesondere dadurch, dass eine vereinfachte und genauere Ermittlung der Diagnose eines rotationsfähigen Bauteils möglich ist unter Verwendung einer möglichst geringen Anzahl an Sensoren und Messstellen im Rahmen beispielsweise einer Eigenfrequenz- und/oder Anregungsfrequenzanalyse sowie Maschinenzustandsdiagnose.

Diese Aufgabe ist durch die Sensorvorrichtung mit den Merkmalen des Anspruch 1 und durch die Sensoranordnung mit den Merkmalen des Anspruchs 7 gelöst. Vorteilhafte Weiterbildungen der Erfindung sind in den abhängigen Ansprüchen angegeben.

In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein. Die Erfindung ist durch die anhängenden Ansprüche definiert.

### Beschreibung der Erfindung

Erfindungsgemäß wird eine Sensorvorrichtung vorgeschlagen, ausgebildet zur Erfassung von zumindest drei Parametern eines zu analysierenden und rotationsfähigen Bauteils und zur drehfesten Anordnung auf dem Bauteil, umfassend ein Gehäuse, und zumindest drei in dem Gehäuse angeordnete Beschleunigungssensormittel, welche jeweils eine orthogonal zu den beiden anderen Beschleunigungssensormitteln angeordnete Messrichtung aufweisen, wobei zumindest eines der Beschleunigungssensormittel als MEMS-Sensormittel ausgebildet ist, welches zur Messung in tangentialer und/oder radialer Richtung des Bauteils ausgebildet und/oder angeordnet ist. Das zumindest eine Beschleunigungssensormittel ist dazu eingerichtet, die Drehzahl und/oder den Drehwinkel des Bauteils anhand einer sinus- oder kosinusähnlichen Schwingung der gemessenen Erdbeschleunigung zu erfassen.

Der Erfindung liegt der Gedanke zu Grunde, dass eine einzige Sensorvorrichtung bzw. ein einziger Kombismartsensor ausgebildet ist, innerhalb dessen Gehäuse ausreichend Sensormittel vorhanden sind, um eine Zustandsdiagnose sowie eine Eigenfrequenz- und/oder Resonanz- und/oder Anregungsfrequenzanalyse (z.B. Hochfahr- und Auslauftest) auszuführen. Dieser Kombismartsensor ist auf dem zu analysierenden Bauteil selbst anordenbar, wobei das zu analysierende Bauteil beispielsweise eine rotationsfähige oder rotierende Welle oder ein anderes rotationsfähiges oder rotierendes Bauteil sein kann, wie z.B. ein verzahntes Hohlrad, Läufer eines Elektromotors, ein Wälzlager, oder aber auch Läufer einer elektrischen Maschine. Dadurch ist nur noch eine einzige Sensorvorrichtung an einer einzigen Messstelle nötig.

Der Kombismartsensor sieht nun vor, dass zusätzlich zu den Beschleunigungssensormitteln auch zumindest ein MEMS-Sensormittel als Schwerkraftsensor zu einer Einheit integriert ist. Der Vorteil ist, dass der Kombismartsensor durch seine Anordnung unmittelbar auf dem zu analysierenden Bauteil alle Schwingungen ohne Dämpfung und erheblich deutlicher erfassen kann, als das mit dem bisher bekannten System möglich war. Es tritt nämlich deutlich weniger Signalrauschen auf. Beispielsweise werden die Schwingungen bei einem Getriebe als das zu analysierende Bauteil werden hauptsächlich durch die Umfangskraft verursacht, was bis zu 80% der Gesamtkraft, aus Drehmoment verursacht, ausmacht. Damit können insbesondere auf dem zu analysierenden Bauteil - beispielsweise einer Welle - vorherrschenden Torsionsschwingungen in vorteilhafter Weise erfasst werden.

Das MEMS-Sensormittel wird zur Ermittlung der räumlichen Lage der Sensorvorrichtung zu dem zu analysierenden Bauteil verwendet. Somit ist bei jeder Schwingung die räumliche Lage der Sensorvorrichtung bekannt. Der sich daraus ergebende Vorteil liegt darin, dass nunmehr nicht nur eine Aussage zu dem Allgemeinzustand des Bauteils getroffen werden kann ("Ein Zahn des Zahnrades ist defekt") sondern auch eine Aussage zur konkreten Schadensstelle ("Der Defekt des Zahnrades befindet sich an diesem bestimmten Zahn").

Der Kombismartsensor ist zudem in einfacher Weise bei bereits bestehenden Systemen nachrüstbar, da er nur an einer einzigen Messstelle angeordnet werden muss. Er kann beispielsweise dauerhaft oder lediglich zeitlich begrenzt für eine Messdauer dort angeordnet sein.

Die Sensormittel des Kombismartsensors können zumindest drei Parameter erfassen, wobei als Parameter eine Kraftkomponente aufgefasst werden soll. Die Sensormittel sind derart in dem Gehäuse anordenbar, dass sie - ähnlich einem dreidimensionalen kartesischen Koordinatensystem - in drei Raumrichtungen messen, nämlich axial, radial und tangential bezogen auf das zu analysierende Bauteil und somit drei Parameter erfassen. Die Messrichtung des MEMS-Sensormittels sollte tangential zu dem zu analysierenden Bauteil sein, um damit über die Schwankungen der Erdbeschleunigungsmessung die Drehzahl der Welle erfassen zu können. Das tangentiale Messsignal enthält nicht nur Informationen zu der Erdbeschleunigung - es wird auch von anderen Schwingungen überlagert. Diese Überlagerungen bzw. dieses Signalrauschen stammt von anderen wahlweise nicht zu analysierenden Bauteilen (Welle, Getriebeteile, Lager, Generator, etc.). Dieses Rauschen ist in allen drei Messsignalen vorhanden, insbesondere in dem tangentialen Messsignal, und muss zur Zustandsdiagnose sowie Eigenfrequenz- und/oder Resonanz- und/oder Anregungsfrequenzanalyse (z.B. Hochfahr- und Auslauftest) herausgefiltert werden.

Die Drehzahl und oder der Drehwinkel wird somit mit dem MEMS-Sensormittel und die Schwingungen (Schwinggeschwindigkeit und/oder Schwingbeschleunigung) werden mit dem MEMS-Sensormittel und mit den beiden anderen Beschleunigungssensormitteln erfasst.

Gemäß einer bevorzugten Ausführungsform der Sensorvorrichtung nach der Erfindung sind drei der Beschleunigungssensormittel als MEMS-Sensormittel ausgebildet. Sie weisen vorzugsweise einen Messbereich von 0 Hz bis 1500 Hz auf. Mit dieser Ausführung kann ein System analysiert werden, bei welchem niedrige Frequenzen im Bereich von 0 Hz bis 1500 Hz auftreten. Für viele Anwendungen reicht das aus. Zu nennen ist hier beispielsweise eine Unwucht einer langsam laufenden Welle.

Gemäß einer weiteren bevorzugten Ausführungsform der Sensorvorrichtung nach der Erfindung sind drei Beschleunigungssensormittel vorgesehen, wobei zwei der drei orthogonal zueinander ausgerichteten Beschleunigungssensormittel jeweils als Piezo-Sensormittel ausgebildet sind und zur Messung in radialer bzw. axialer Richtung des Bauteils ausgebildet und/oder angeordnet ist. Das dritte Beschleunigungssensormittel ist als MEMS-Sensormittel ausgebildet, wobei vorzugsweise die Piezo-Sensormittel einen Messbereich von 0,05 Hz bis 10000 Hz aufweisen.

Gemäß einer weiteren bevorzugten Ausführungsform der Sensorvorrichtung nach der Erfindung umfasst sie ein viertes Beschleunigungssensormittel, wobei die drei orthogonal zueinander ausgerichteten Beschleunigungssensormittel jeweils als Piezo-Sensormittel ausgebildet sind und das vierte Beschleunigungssensormittel als das MEMS-Sensormittel ausgebildet ist, wobei vorzugsweise die Piezo-Sensormittel einen Messbereich von 0,05 Hz bis 10000 Hz aufweisen. Piezo-Sensormittel können drei wesentliche Effekte messen, nämlich Transversal-, Longitudinal- und Schereffekte. Diese Beschleunigungssensoren lassen sich innerhalb eines einzigen Gehäuses kombinieren. Piezo-Sensormittel dienen grds. der Erfassung höherer Frequenzen. Der MEMS-Sensor hingegen reagiert sehr feinsinnig auf Schwankungen der Beschleunigung, insbesondere auf Änderung der gemessenen Erdbeschleunigung.

Gemäß einer weiteren bevorzugten Ausführungsform der Sensorvorrichtung nach der Erfindung umfasst dieses zumindest ein vorzugsweise in dem Gehäuse angeordnetes Abstandssensormittel, welches zur Messung in radialer und/oder axialer Richtung des Bauteils ausgebildet und/oder angeordnet ist Das Abstandssensormittel nimmt eine Abstandsmessung bzw. Wegmessung beispielsweise zwischen Läufer und Stator einer elektrischen Maschine vor, um einen Luftspalt zu messen. Gerade im Hinblick auf die störungsfreie Funktion elektrischer Maschinen können Luftspaltschwankungen eine starke Beeinträchtigung darstellen. Solche Luftspaltschwankungen sind regelmäßig beispielsweise bei großen Generatoren zu beobachten. Vorteilhaft ist die Kombination der beiden Messsignale (Drehzahl/Drehwinkel von dem MEMS-Sensormittel und Luftspaltgröße von dem Abstandssensormittel) in einem einzigen Gehäuse. Das Abstandssensormittel misst also über eine volle Umdrehung des Bauteils verschiedene Luftspaltgröße. Wenn nun zu diesen Abstandsdaten die MEMS-Daten hinzukommen, können die Abstandsdaten räumlich dargestellt werden und der Ungleichlauf lokalisiert werden. Zudem ist lediglich ein einziges Sensorgehäuse erforderlich. Mit der Erfindung sind daher nicht nur die Schwingungen des Bauteils analysierbar, sondern auch deren Ursache (Luftspalt) erforschbar. Das Abstandssensormittel kann beispielsweise ein Wirbelstromsensor oder ein kapazitiver Sensor sein.

Gemäß einer weiteren bevorzugten Ausführungsform der Sensorvorrichtung nach der Erfindung umfasst dieses ein Sensormittelkonvolut, ausgewählt aus der Gruppe umfassend
a) ein Abstandssensormittel, radial angeordnet oder anordenbar und
   drei MEMS-Sensormittel, jeweils orthogonal zueinander tangential und radial und axial angeordnet oder anordenbar; oder
b) zwei Abstandssensormittel, radial und axial angeordnet oder anordenbar und drei MEMS-Sensormittel, jeweils orthogonal zueinander tangential und radial und axial angeordnet oder anordenbar; oder
c) ein Abstandssensormittel, radial angeordnet oder anordenbar und
   ein MEMS-Sensormittel, tangential oder radial angeordnet oder anordenbar und drei Piezo-Sensormittel, jeweils orthogonal zueinander tangential und radial und axial angeordnet oder anordenbar; oder
d) zwei Abstandssensormittel, radial und axial angeordnet oder anordenbar und ein MEMS-Sensormittel, tangential oder radial angeordnet oder anordenbar und drei Piezo-Sensormittel, jeweils orthogonal zueinander tangential und radial und axial angeordnet oder anordenbar.

Die Messung in axiale Richtung kann sinnvoll sein, wenn es axiale Verschiebungen aufgrund der speziellen Wicklungen oder durch die Anwendung bestimmter Lagerarten bei Generatoren gibt oder zu erwarten sind. Weitere Vorteile der einzelnen Konvolute ergeben sich aus der übrigen Beschreibung.

Zudem wird eine Sensoranordnung vorgeschlagen zur Erfassung von zumindest zwei Parametern eines zu analysierenden und rotationsfähigen Bauteils und ausgebildet zur drehfesten Anordnung auf dem Bauteil, umfassend ein Gehäuse, und zumindest ein in dem Gehäuse angeordnetes Beschleunigungssensormittel, welches als MEMS-Sensormittel ausgebildet ist, welches zur Messung in tangentialer und/oder radialer Richtung des Bauteils ausgebildet und/oder angeordnet ist, sowie ein vorzugsweise in dem Gehäuse angeordnetes Abstandssensormittel, welches zur Messung in radialer und/oder axialer Richtung des Bauteils ausgebildet und/oder angeordnet ist. Das zumindest eine Beschleunigungssensormittel ist dazu eingerichtet, die Drehzahl und/oder den Drehwinkel des Bauteils anhand einer sinus- oder kosinusähnlichen Schwingung der gemessenen Erdbeschleunigung zu erfassen.

Mittels dieser Sensoranordnung ist eine Kombination der beiden Messsignale (Drehzahl/Drehwinkel von dem MEMS-Sensormittel und Luftspaltgröße von dem Abstandssensormittel) in einem einzigen Gehäuse realisiert. Das Abstandssensormittel misst also über eine volle Umdrehung des Bauteils verschiedene Luftspaltgröße. Wenn nun zu diesen Abstandsdaten die MEMS-Daten hinzukommen, können die Abstandsdaten räumlich dargestellt werden und der Ungleichlauf lokalisiert werden. Zudem ist lediglich ein einziges Sensorgehäuse erforderlich. Mit der Erfindung sind daher nicht nur die Schwingungen des Bauteils analysierbar, sondern auch deren Ursache (Luftspalt) erforschbar.

Gemäß einer bevorzugten Ausführungsform der Sensoranordnung nach der Erfindung umfasst diese ein Sensormittelkonvolut, ausgewählt aus der Gruppe umfassend
a) ein Abstandssensormittel, radial angeordnet oder anordenbar und
   ein MEMS-Sensormittel, tangential oder radial angeordnet oder anordenbar; oder
b) zwei Abstandssensormittel, radial und axial angeordnet oder anordenbar und ein MEMS-Sensormittel tangential oder radial angeordnet oder anordenbar; oder
c) ein Abstandssensormittel, radial angeordnet oder anordenbar und
   drei MEMS-Sensormittel, jeweils orthogonal zueinander tangential und radial und axial angeordnet oder anordenbar; oder
d) zwei Abstandssensormittel, radial und axial angeordnet oder anordenbar und drei MEMS-Sensormittel, jeweils orthogonal zueinander tangential und radial und axial angeordnet oder anordenbar; oder
e) ein Abstandssensormittel, radial angeordnet oder anordenbar und
   ein MEMS-Sensormittel, tangential oder radial angeordnet oder anordenbar und drei Piezo-Sensormittel, jeweils orthogonal zueinander tangential und radial und axial angeordnet oder anordenbar; oder
f) zwei Abstandssensormittel, radial und axial angeordnet oder anordenbar und ein MEMS-Sensormittel, tangential oder radial angeordnet oder anordenbar und drei Piezo-Sensormittel, jeweils orthogonal zueinander tangential und radial und axial angeordnet oder anordenbar.

Das Abstandssensormittel kann beispielsweise ein Wirbelstromsensor oder ein kapazitiver Sensor sein. Weitere Vorteile der einzelnen Konvolute ergeben sich aus der übrigen Beschreibung.

Gemäß einer weiteren Ausführungsform der Sensorvorrichtung oder der Sensoranordnung nach der Erfindung weist das zumindest eine MEMS-Sensormittel einen Messbereich von 0 Hz bis 1500 Hz auf.

Es ist gemäß einer weiteren Ausführungsform der Sensorvorrichtung oder der Sensoranordnung nach der Erfindung denkbar, dass das zumindest eine Piezo-Sensormittel einen Messbereich von 0,05 Hz bis 10000 Hz aufweist.

Gemäß einer weiteren bevorzugten Ausführungsform der Sensorvorrichtung oder der Sensoranordnung nach der Erfindung ist eine Speichereinheit zum Speichern von Sensordaten der Sensormittel und/oder eine Datenschnittstelle zur kabellosen und/oder kabelgebundenen Übertragung von Sensordaten der Sensormittel und/oder ein Auswertmittel zum Auswerten der Sensordaten der Sensormittel vorgesehen. Die Sensordaten können beispielsweise auf dem Speicher abgelegt und erst nach einer definierten Messdauer, beispielsweise nach Demontage des Kombismartsensors von dem Bauteil, ausgelesen und analysiert werden. Die Sensordaten können jedoch auch zur Auswertung anhand unterschiedlicher Aspekte der Maschinendiagnose und/oder Maschinendynamik über eine Datenschnittstelle an eine stationäre Recheneinheit versendet werden. Es ist auch denkbar, dass Auswertmittel, wie beispielsweise Mikroprozessoren und/oder Mikrocontroller in dem Gehäuse der Sensorvorrichtung, angeordnet sind, so dass eine Auswertung in der Sensorvorrichtung selbst erfolgen kann, wobei die Ergebnisse der Auswertung bzw. die Zustandsdiagnose dann über die Schnittstelle an einen externen Datenempfänger übermittelbar ist. Das Auswertmittel kann beispielsweise die Abstandssensormitteldaten in Kombination mit der Drehzahl- und/oder Drehwinkelerfassung verarbeiten.

Es wird zudem ein Sensorsystem vorgeschlagen, umfassend zumindest ein rotationsfähiges Bauteil und eine erfindungsgemäße Sensorvorrichtung und/oder eine erfindungsgemäße Sensoranordnung, welche drehfest an dem/den Bauteil/Bauteilen angeordnet ist/sind. Die Sensorvorrichtung und die Sensoranordnung sind derart angeordnet, dass das MEMS-Sensormittel in tangentialer oder radialer Richtung bezüglich des Bauteils misst.

Das Sensorsystem weist im Wesentlichen die oben bezüglich der Sensorvorrichtung und der Sensoranordnung genannten Vorteile auf, worauf hiermit verwiesen wird.

Es wird zudem eine Verwendung der erfindungsgemäßen Sensorvorrichtung oder der erfindungsgemäßen Sensoranordnung vorgeschlagen unter Nutzung des von dem mindestens einen in tangentialer und/oder radialer Richtung des Bauteils ausrichtbaren und/oder ausgerichteten MEMS-Sensormittel (26) erfassten Messsignals zur Ermittlung der Drehzahl und/oder des Drehwinkels des Bauteils anhand einer sinus- oder kosinusähnlichen Schwingung der gemessenen Erdbeschleunigung.

Die Verwendung weist im Wesentlichen die oben bezüglich der Sensorvorrichtung und der Sensoranordnung genannten Vorteile auf, worauf hiermit verwiesen wird.

Vorteile der hiermit offenbarten Sensorvorrichtung und ihrer vorteilhaften Ausgestaltungen lauten wie nachfolgend:
- Verringerung bis zum Unterbinden der Einflüsse von Störfrequenzen durch die Eigenfrequenzen der feststehenden strukturellen Komponenten (im Vergleich zur bisherigen Methode).
- Möglichkeit zur quantitativen Ermittlung einer Unwucht und/oder eines Ausrichtefehlers bei einer rotierenden Komponente durch das Offset in den radialen Beschleunigungsmessungen sowie Interaktionen zwischen radialen und axialen Schwingungsmessungen.
- Bessere Möglichkeit, um die Position einer Auffälligkeit zu lokalisieren bei bestimmten Anwendungen, wie z.B. bei einem Getriebe oder bei einem Generator oder bei einem Wälzlager.
- Anwendung für Lastmessungen bei definierten Anwendungen ist möglich.
- Der Kombismartsensor kann auch für die dauerhafte Zustandsüberwachung, diverse Testverfahren oder aber auch Problemlösungseinsätze (Problemfindung und Problemlösung) effizient, einfach und flexibel eingesetzt werden.
- Der Kombismartsensor kann zudem dazu führen, dass auf mehrere Sensoren auf einem feststehenden Bauteil (zumeist Gehäuse) und/oder sowie einem zusätzlichen Drehzahlsensor (Inkrementgeber oder Magnetring) verzichtet werden kann. Damit sind erhebliche Kostenreduktionen und wesentliche Qualitätssteigerungen bei der Messung zu erwarten.
- Erkennung von Turbulenz-Intensität sowie Einflüsse dynamischer Regelvorgänge und Auswertung von Nachlaufeffekten bei Windkraftanlagen.

Aspekte der Maschinendynamik und Zustandsdiagnose können sein: Starke Torsionsschwingungen mit Eigenfrequenz des Systems (ungeeignete Regelung; Bedarf zur Dämpfungsmaßnahmen), Unwucht, Ausrichtefehler, starke Nachlaufeffekte (beispielsweise bei Windenergieanlagen durch höhere Windturbulenzen und dadurch verursachte erhöhte Drehzahlvariabilität), Lagerschäden, Verzahnungsschäden, ungleichmäßige Lastverteilung auf den einzelnen Planetenrädern in einem Getriebe, Generatorauffälligkeiten anhand der charakteristischen Frequenzen der Magnetkräfte, usw.

Weitere Vorteile, Merkmale und Einzelheiten der Erfindung ergeben sich aus der nachfolgenden Beschreibung eines bevorzugten Ausführungsbeispiels sowie anhand der Zeichnung. Es zeigt:
- Fig. 1: ein bekanntes Antriebssystem mit Standardsensoren;
- Fig. 2: eine Sensorvorrichtung nach der Erfindung an einem Antriebssystem;
- Fig. 3: eine schematische Detailansicht einer Sensorvorrichtung nach Fig. 2;
- Fig. 4: eine Grafik eines MEMS-Sensorsignals ohne überlagerte Schwingungen; und
- Fig. 5: ein Flussdiagramm zur Verwendung von mit der Sensorvorrichtung erfassten Messsignalen.

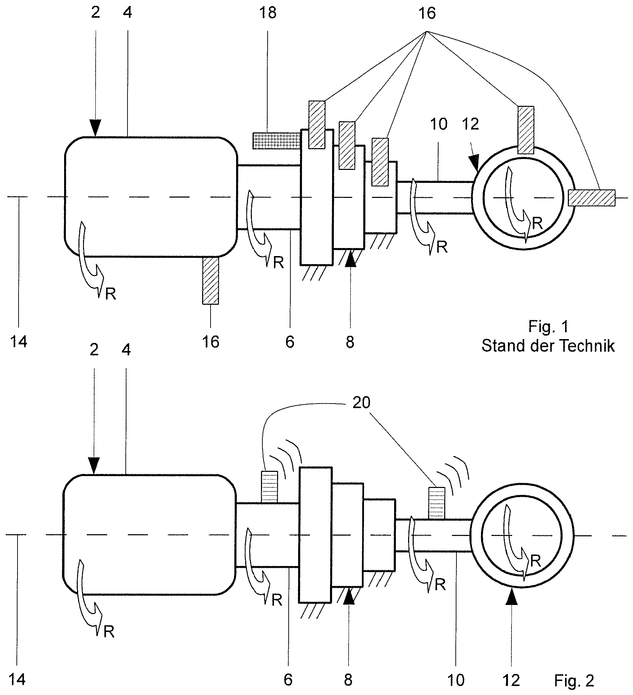

Die Figuren 1 und 2 zeigen jeweils ein Antriebssystem 2, umfassend eine Last 4, welche über eine erste Welle 6 an ein ortsfestes Getriebe 8 gekoppelt ist. Das Getriebe 8 wiederum ist über eine zweite Welle 10 an eine elektrische Maschine 12 angebunden. Für die Last 4, die Wellen 6 und 10 sowie die elektrische Maschine 12 ist jeweils die Rotationsrichtung mittels Pfeil R angegeben. Das Antriebssystem 2 ist in seiner Längsrichtung von einer Längsachse 14 durchgriffen, welche horizontal verläuft - die Wellen 6 und 10 sind somit perfekt waagerecht. Die beiden Wellen 6 und 10 stellen rotierende bzw. rotationsfähige und zu analysierende Bauteile dar.

Figur 1, welche eine bekannte und nachteilige Sensoranordnung zeigt, bildet Standartsensoren 16 ab, welche an feststehenden Komponenten des Antriebssystems 2 angeordnet sind. Zudem ist auch ein zusätzlicher Drehzahlsensor 18 an dem Getriebe 8 angeordnet, um die Drehzahl und den Drehwinkel der ersten Welle 6 zu erfassen.

Figur 2 zeigt die Verwendung einer erfindungsgemäßen Sensorvorrichtung 20 bzw. eines Kombismartsensors bei dem Antriebssystem 2. Auf jedem Umfang jeder Welle 6 und 8 ist eine Sensorvorrichtung 20 drehfest angeordnet. Die von den Kombismartsensoren gemessenen Daten können kabellos (Funk, Wi-Fi, Bluetooth, etc.) und/oder kabelgebunden (Schleifkontakt, etc.) übertragen werden, wobei Fig. 2 beispielhaft eine kabellose Übertragung andeutet.

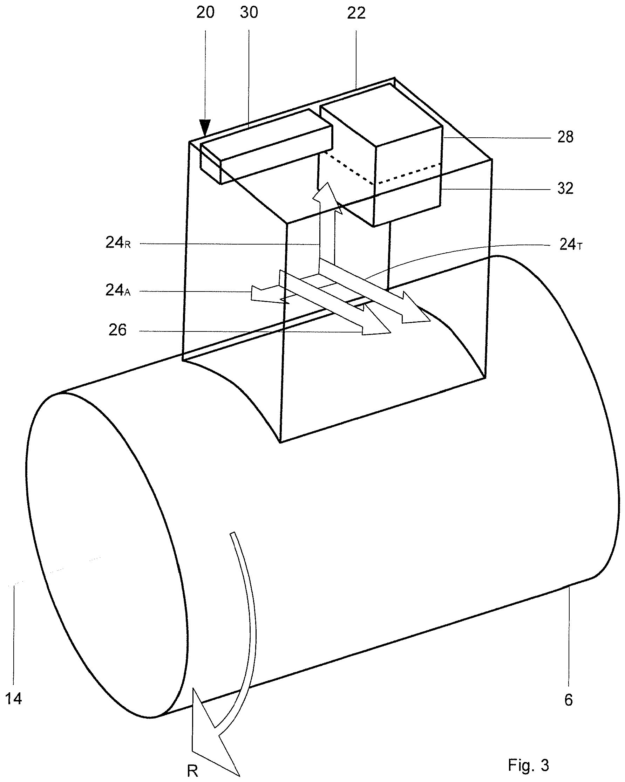

Figur 3 zeigt nun in schematisch vereinfachter Weise die auf der Welle 6 angeordnete Sensorvorrichtung 20, welche ein Gehäuse 22 umfasst. Das Gehäuse 22 kann mit geeigneten Mitteln reversibel oder irreversibel drehfest an dem Bauteil und hier an der Welle 6 angeordnet sein. Innerhalb des Gehäuses 22 sind drei Piezo-Sensormittel 24_{A}, 24_{R}, 24_{T} und ein MEMS-Sensormittel 26 angeordnet, wobei von den Sensormitteln zur Vereinfachung lediglich die Messrichtungen per Pfeil dargestellt sind. Ein erstes Piezo-Sensormittel 24_{A} misst Beschleunigungen der ggf. rotierenden Welle 6 in axialer Richtung parallel zu der Längsachse 14. Ein weiteres Piezo-Sensormittel 24_{R} misst Beschleunigungen der ggf. rotierenden Welle 6 in radialer Richtung und ein weiteres Piezo-Sensormittel 24_{T} misst Beschleunigungen der ggf. rotierenden Welle 6 in tangentialer Richtung. Jedes der Piezo-Sensormittel 24_{A}, 24_{R}, 24_{T} weist eine orthogonal zu den beiden anderen Piezo-Sensormitteln 24_{A}, 24_{R}, 24_{T} ausgerichtete Messrichtung auf. Das MEMS-Sensormittel 26 misst Beschleunigungen der ggf. rotierenden Welle 6 in tangentialer Richtung und dient als Schwerkraftsensor zur Ermittlung der räumlichen Lage der Sensorvorrichtung 2 zu der Welle 6. In dem Gehäuse 22 ist zudem eine Speichereinheit 28 angeordnet, welche zum Speichern der Sensordaten der Piezo-Sensormittel 24_{A}, 24_{R}, 24_{T} und des MEMS-Sensormittels 26 dient. Auf die Speichereinheit 28 ist vermittels einer kabellosen und/oder kabelgebundenen Datenschnittstelle 30 zugreifbar zum Lesen und/oder Schreiben von Daten. Zudem umfasst das Gehäuse 22 ein Auswertmittel 32 zur Auswertung der Sensordaten, welches in Datenverbindung mit der Speichereinheit 28 und der Datenschnittstelle 30 steht.

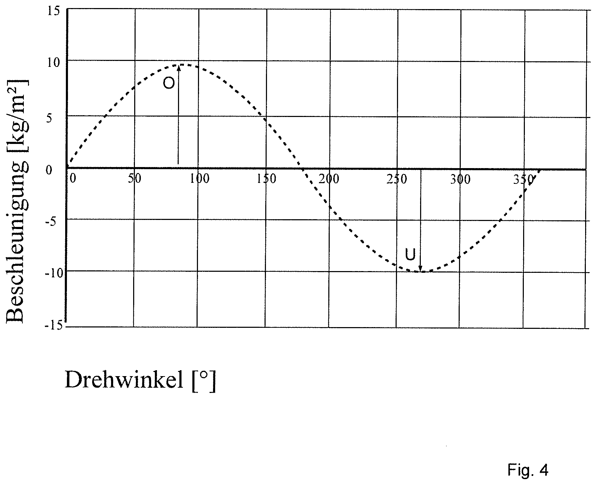

Eine Funktionsweise des MEMS-Sensormittels 26 ist in Figur 4 anhand einer idealisiert perfekt waagerechten Welle 6 und mittels Sensordaten einer ganzen Umdrehung von 360° exemplarisch gezeigt. Die Umdrehung beginnt mit dem MEMS-Sensormittel 26, welches auf 9 Uhr bezogen auf die Längsachse 14 ausgerichtet ist. Die Welle 6 rotiert in Rotationsrichtung R, wobei sodann das MEMS-Sensormittel 26 nach einem Drehwinkel von 90° - entsprechend 12 Uhr - eine Erdbeschleunigung von 9,81 kg/m² misst. Das MEMS-Sensormittel 26 befindet sich nun oberhalb der Welle 6, gezeigt in Fig. 3 und angedeutet durch den Pfeil O. Die Welle 6 rotiert in Rotationsrichtung R weiter um 90° - entsprechend 3 Uhr - und passiert bei faktischer Schwerelosigkeit den Drehwinkel von 180°. Danach liegt eine negative Erdbeschleunigung vor, wobei bei einem Drehwinkel von 270° - entsprechend 6 Uhr - eine Erdbeschleunigung von - 9,81 kg/m² gemessen wird, angedeutet durch den Pfeil U. Die Vollrotation wird vervollständigt durch eine weitere Rotation um 90° zur Ausgangsposition, bei deren Passage ebenfalls faktische Schwerelosigkeit herrscht.

Die von dem MEMS-Sensormittel 26 durchgeführte Drehzahlmessung und Drehwinkelmessung erfolgt anhand der Richtungsänderung der gemessenen Schwerkraft bzw. Erdbeschleunigung. Die gemessene Erdbeschleunigung verändert sich während der Rotation der Welle 6 in der Abhängigkeit der Position des MEMS-Sensormittels 26 zu der Längsachse 14. Dadurch lässt sich sehr einfach sowohl der Drehwinkel als auch die Drehzahl der Welle 6 berechnen (eine Kosinus-Funktion oder eine Sinusfunktion je nach Referenzachse: 0° nach oben, nach unten, rechts oder links von der Welle), wobei hier die Anzahl der Änderungen der Beschleunigungswertes pro Zeiteinheit relevant ist.

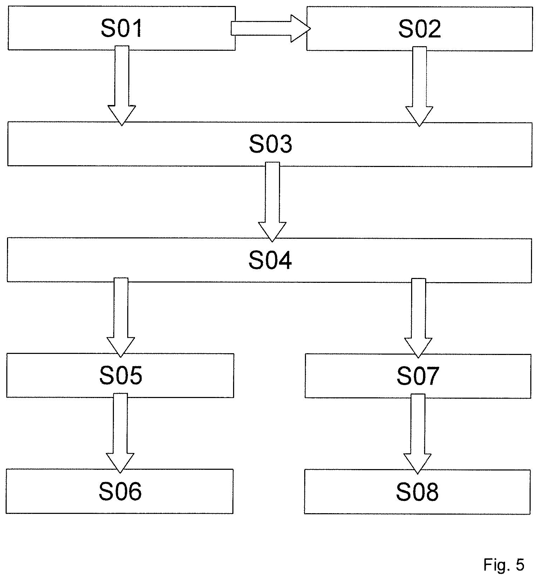

Das in Figur 5 gezeigte Flussdiagramm dient lediglich der exemplarischen Veranschaulichung einer möglichen Verwendung eines Kombismartsensors und hat keinen Anspruch auf vollständige Abbildung sämtlicher Ausgestaltungen oder Anwendungsmöglichkeiten der Erfindung. Das Flussdiagramm zeigt in seinen Verfahrensschritten S01 bis S08 eine Schwingungsanalyse zur Schadensidentifikation und -lokalisation.

In S01 sind sog. Zeitsignale vorhanden, welche auch die "rohen" Sensordaten umfassen. Diese umfassen auch die in Fig. 4 gezeigte Sinusform mit ihren schadensverursachten Überlagerungsschwingungen und der daraus abgeleiteten Drehzahl und/oder dem Drehwinkel. Aus der gemessenen Beschleunigung, beispielsweise mit den Piezosensoren, kann eine Reihe von Kenngrößen gebildet werden, wie z.B. RMS (Root Mean Square, Quadratisches Mittel) oder Scheitelfaktor bzw. Crestfaktor. Aus der beispielsweise mit dem MEMS-Sensormittel gemessenen Drehzahl kann die Drehzahlvariabilität ermittelt werden, welche die Standardabweichung der Drehzahl/Mittelwert der Drehzahl ist. Diese Kenngröße ist der Indikator der Torsionsdynamik und beispielsweise bei einer Windenergieanlage der Indikator für die Turbulenzintensität des Winds.

In S02 kann aus den in S01 vorhandenen Daten ein Hüllkurvensignal generiert werden, wobei diese Notwendigkeit von dem Analyseziel abhängt.

Die Daten aus SO1 oder alternativ auch zusätzlich das Hüllkurvensignal aus S02 können in S03 zur Verfügung gestellt werden, um in Abhängigkeit des Analyseziels unterschiedlich Signale zu verwenden. Ganz unabhängig von dem Analyseziel jedoch sollte eine Filterung der Signale vorgenommen werden sowohl für die Zeitsignale wie auch für das Hüllkurvensignal im Hinblick auf relevante Frequenzen.

Nach der Signalaufbereitung bzw. Filterung in S03 kann in S04 eine Übertragung der Signale in den Frequenzbereich stattfinden. Zu unterscheiden ist hier zwischen einem drehzahlkonstanten zu analysierenden Bauteil und einem drehzahlvariablen zu analysierenden Bauteil. Während nämlich bei einem drehzahlkonstanten Bauteil dessen gemessene Schwingungssignale mittels einer schnellen Fourier-Transformation (FFT) in einen Frequenzbereich eines Frequenzspektrums übertragen werden können, bedarf es bei einem drehzahlvariablen Bauteil der Ordnungsanalyse, wobei hierfür die Drehzahl oder der Drehwinkel genutzt wird. Daher stellt die mittels MEMS-Sensormittel 26 erfasste Drehzahl oder der Drehwinkel bei einem drehzahlvariablen Bauteil einen wichtigen Aspekt für die Schwingungsanalyse dar.

In S05 kann aus dem Ergebnis der FFT oder Ordnungsanalyse das entsprechende Amplitudenspektrum erstellt werden, welches ein periodisches oder sinusförmiges Signal ist. Aus diesem Spektrum kann in S06 eine Zustandsdiagnose und/oder dynamische Analyse (Eigenfrequenz- und/oder Anregungsfrequenzanalyse) erstellt werden und Resonanzen und/oder Schäden erkennbar sein durch Vergleich mit SOLL-Werten und/oder Schadensmustern. Zur Analyse eignen sich insbesondere die periodischen Anregungsfrequenzen von Unwuchten oder Ausrichtfehlern sowie Zahnradschäden oder fortgeschrittene Lagerschäden.

In S07 kann aus dem in S02 erstellten Hüllkurvensignal, bei welchem in S04 eine FFT angewandt wurde, ein Hüllkurvenspektrum erstellt werden.

Mit den aus den Schritten S05 und S07 resultierenden Spektren und anhand der kinematischen Frequenzen und der Eigenfrequenzen des analysierten Bauteils lässt sich eine selektive Spektralanalyse durchführen und anhand von Schadensmustern bzw. Auffälligkeitsmustern lässt sich eine Aussage zu dem Zustand des Systems und/oder eines oder mehrerer Komponenten treffen.

### Bezugszeichenliste

- 2: Antriebssystem
- 4: Last
- 6: erste Welle
- 8: Getriebe
- 10: zweite Welle
- 12: elektrische Maschine
- 14: Längsachse
- 16: Standartsensor
- 18: Drehzahlsensor
- 20: Sensorvorrichtung
- 22: Gehäuse
- 24_{A}: Piezo-Sensormittel
- 24_{R}: Piezo-Sensormittel
- 24_{T}: Piezo-Sensormittel
- 26: MEMS-Sensormittel
- 28: Speichereinheit
- 30: Datenschnittstelle
- 32: Auswertmittel

- R: Rotationsrichtung

## Patentansprüche

1. Sensorvorrichtung zur Erfassung von zumindest drei Parametern eines zu analysierenden und rotationsfähigen Bauteils und ausgebildet zur drehfesten Anordnung auf dem Bauteil, umfassend ein Gehäuse (22), und zumindest drei in dem Gehäuse (22) angeordnete Beschleunigungssensormittel, welche jeweils eine orthogonal zu den beiden anderen Beschleunigungssensormitteln angeordnete Messrichtung aufweisen, wobei zumindest eines der Beschleunigungssensormittel als MEMS-Sensormittel (26) ausgebildet ist, welches zur Messung in tangentialer und/oder radialer Richtung des Bauteils ausgebildet und/oder anordenbar ist, **dadurch gekennzeichnet, dass** das MEMS-Sensormittel (26) dazu eingerichtet ist, die Drehzahl und/oder den Drehwinkel des Bauteils anhand einer sinus- oder kosinusähnlichen Schwingung der gemessenen Erdbeschleunigung zu erfassen.

2. Sensorvorrichtung nach Anspruch 1, wobei
drei der Beschleunigungssensormittel als MEMS-Sensormittel ausgebildet sind.

3. Sensorvorrichtung nach Anspruch 1, umfassend
drei Beschleunigungssensormittel, wobei zwei der drei orthogonal zueinander ausgerichteten Beschleunigungssensormittel jeweils als Piezo-Sensormittel ausgebildet sind und zur Messung in radialer bzw. axialer Richtung des Bauteils ausgebildet und/oder anordenbar ist.

4. Sensorvorrichtung nach Anspruch 1, umfassend
ein viertes Beschleunigungssensormittel, wobei die drei orthogonal zueinander ausgerichteten Beschleunigungssensormittel jeweils als Piezo-Sensormittel (24_{A}, 24_{R}, 24_{T}) ausgebildet sind und das vierte Beschleunigungssensormittel als das MEMS-Sensormittel (26) ausgebildet ist.

5. Sensorvorrichtung nach einem der vorangehenden Ansprüche, umfassend zumindest ein vorzugsweise in dem Gehäuse angeordnetes Abstandssensormittel, welches zur Messung in radialer und/oder axialer Richtung des Bauteils ausgebildet und/oder anordenbar ist.

6. Sensorvorrichtung nach Anspruch 5, umfassend
ein Sensormittelkonvolut, ausgewählt aus der Gruppe umfassend
a) ein Abstandssensormittel, radial anordenbar und drei MEMS-Sensormittel, jeweils orthogonal zueinander tangential und radial und axial anordenbar; oder
b) zwei Abstandssensormittel, radial und axial anordenbar und drei MEMS-Sensormittel, jeweils orthogonal zueinander tangential und radial und axial anordenbar; oder
c) ein Abstandssensormittel, radial anordenbar und ein MEMS-Sensormittel, tangential oder radial anordenbar und drei Piezo-Sensormittel, jeweils orthogonal zueinander tangential und radial und axial anordenbar; oder
d) zwei Abstandssensormittel, radial und axial anordenbar und ein MEMS-Sensormittel, tangential oder radial anordenbar und drei Piezo-Sensormittel, jeweils orthogonal zueinander tangential und radial und axial anordenbar.

7. Sensoranordnung zur Erfassung von zumindest zwei Parametern eines zu analysierenden und rotationsfähigen Bauteils und ausgebildet zur drehfesten Anordnung auf dem Bauteil, umfassend ein Gehäuse, und zumindest ein in dem Gehäuse angeordnetes Beschleunigungssensormittel, welches als MEMS-Sensormittel ausgebildet ist, welches zur Messung in tangentialer und/oder radialer Richtung des Bauteils ausgebildet und/oder anordenbar ist, sowie ein vorzugsweise in dem Gehäuse angeordnetes Abstandssensormittel, welches zur Messung in radialer und/oder axialer Richtung des Bauteils ausgebildet und/oder anordenbar ist, **dadurch gekennzeichnet, dass** das MEMS-Sensormittel (26) dazu eingerichtet ist, die Drehzahl und/oder den Drehwinkel des Bauteils anhand einer sinus- oder kosinusähnlichen Schwingung der gemessenen Erdbeschleunigung zu erfassen.

8. Sensoranordnung nach Anspruch 7, umfassend ein Sensormittelkonvolut, ausgewählt aus der Gruppe umfassend
a) ein Abstandssensormittel, radial anordenbar und ein MEMS-Sensormittel, tangential oder radial anordenbar; oder
b) zwei Abstandssensormittel, radial und axial anordenbar und ein MEMS-Sensormittel tangential oder radial anordenbar; oder
c) ein Abstandssensormittel, radial anordenbar und drei MEMS-Sensormittel, jeweils orthogonal zueinander tangential und radial und axial anordenbar; oder
d) zwei Abstandssensormittel, radial und axial anordenbar und drei MEMS-Sensormittel, jeweils orthogonal zueinander tangential und radial und axial anordenbar; oder
e) ein Abstandssensormittel, radial anordenbar und ein MEMS-Sensormittel, tangential oder radial anordenbar und drei Piezo-Sensormittel, jeweils orthogonal zueinander tangential und radial und axial anordenbar; oder
f) zwei Abstandssensormittel, radial und axial anordenbar und ein MEMS-Sensormittel, tangential oder radial anordenbar und drei Piezo-Sensormittel, jeweils orthogonal zueinander tangential und radial und axial anordenbar.

9. Sensorvorrichtung nach einem der Ansprüche 1 bis 6 oder
Sensoranordnung nach Anspruch 7 oder 8, wobei
das zumindest eine MEMS-Sensormittel einen Messbereich von 0 Hz bis 1500 Hz aufweist.

10. Sensorvorrichtung nach einem der Ansprüche 3 bis 6 und 9 oder
Sensoranordnung nach Anspruch 8 oder 9, wobei
das zumindest eine Piezo-Sensormittel einen Messbereich von 0,05 Hz bis 10000 Hz aufweist.

11. Sensorvorrichtung nach einem der Ansprüche 1 bis 6, 9 oder 10 oder Sensoranordnung nach einem der Ansprüche 7 bis 10, umfassend
eine Speichereinheit (30) zum Speichern von Sensordaten der Sensormittel und/oder eine Datenschnittstelle (28) zur kabellosen und/oder kabelgebundenen Übertragung von Sensordaten der Sensormittel und/oder ein Auswertmittel (32) zum Auswerten der Sensordaten der Sensormittel.

12. Sensorsystem, umfassend
zumindest ein rotationsfähiges Bauteil und eine Sensorvorrichtung (2) nach einem der Ansprüche 1 bis 6 oder 9 bis 11 und/oder eine Sensoranordnung nach einem der Ansprüche 7 bis 11, welche drehfest an dem/den Bauteil/Bauteilen angeordnet ist/sind.

13. Verwendung der Sensorvorrichtung nach einem der vorangehenden Ansprüche oder der Sensoranordnung nach einem der vorangehenden Ansprüche unter Nutzung des von dem mindestens einen in tangentialer und/oder radialer Richtung des Bauteils ausrichtbaren und/oder ausgerichteten MEMS-Sensormittel (26) erfassten Messsignals zur Ermittlung der Drehzahl und/oder des Drehwinkels des Bauteils anhand einer sinus- oder kosinusähnlichen Schwingung der gemessenen Erdbeschleunigung.

## Claims

1. A sensor device for capturing at least three parameters of a rotatable component to be analyzed and configured for the torque-proof arrangement on the component, the sensor device comprising a casing (22) and at least three acceleration sensor means disposed in the casing (22), the three acceleration sensor means each having a measuring direction orthogonal to the two other acceleration sensor means, at least one of the acceleration sensor means being designed as a MEMS sensor means (26) which is designed and/or disposable for measurement in a tangential and/or radial direction of the component, **characterized in that** the MEMS sensor means (26) is configured for capturing the rotational speed and/or the rotation angle of the component by means of a sine or cosine-like vibration of the gravitational acceleration measured.

2. The sensor device according to claim 1, wherein
three of the acceleration sensor means are designed as MEMS sensor means.

3. The sensor device according to claim 1, comprising
three acceleration sensor means, two of the three acceleration sensor means oriented orthogonal to each other each being designed as piezoelectric sensor means and being designed and/or disposable for measurement in the radial or axial direction of the component.

4. The sensor device according to claim 1, comprising
a fourth acceleration sensor means, the three acceleration sensor means oriented orthogonal to each other each being designed as a piezoelectric sensor means (24_{A}, 24_{R}, 24_{T}) and the fourth acceleration sensor means being designed as the MEMS sensor means (26).

5. The sensor device according to any one of the preceding claims, comprising at least one distance sensor means which is preferably disposed in the casing and is designed and/or disposable for measurement in the radial and/or axial direction of the component.

6. The sensor device according to claim 5, comprising
a sensor-means group, chosen from the group of
a) one distance sensor means, radially disposable, and three MEMS sensor means, each orthogonally disposable to each other tangentially and radially and axially; or
b) two distance sensors means, radially and axially disposable, and three MEMS sensor means, each orthogonally disposable to each other tangentially and radially and axially; or
c) one distance sensor means, radially disposable, and one MEMS sensor means, tangentially or radially disposable, and three piezoelectric sensor means, each orthogonally disposable to each other tangentially and radially and axially; or
d) two distance sensor means, radially and axially disposable, and one MEMS sensor means, tangentially or radially disposable, and three piezoelectric sensor means, each orthogonally disposable to each other tangentially and radially and axially.

7. A sensor arrangement for capturing at least two parameters of a rotatable component to be analyzed and configured for the torque-proof arrangement on the component, the sensor arrangement comprising a casing and at least one acceleration sensor means which is disposed in the casing and is designed as a MEMS sensor means which is designed and/or disposable for measurement in a tangential and/or radial direction of the component, and a distance sensor means which is preferably disposed in the casing and is designed and/or disposable for measurement in the radial and/or axial direction of the component, **characterized in that** the MEMS sensor means (26) is configured for capturing the rotational speed and/or the rotation angle of the component by means of a sine or cosine-like vibration of the gravitational acceleration measured.

8. The sensor arrangement according to claim 7, comprising
a sensor-means group, chosen from the group of
a) one distance sensor means, radially disposable, and one MEMS sensor means, tangentially or radially disposable; or
b) two distance sensors means, radially and axially disposable, and one MEMS sensor means, tangentially or radially disposable; or
c) one distance sensor means, radially disposable, and three MEMS sensor means, each orthogonally disposable to each other tangentially and radially and axially; or
d) two distance sensor means, radially and axially disposable, and three MEMS sensor means, each orthogonally disposable to each other tangentially and radially and axially; or
e) one distance sensor means, radially disposable, and one MEMS sensor means, tangentially or radially disposable, and three piezoelectric sensor means, each orthogonally disposable to each other tangentially and radially and axially; or
f) two distance sensor means, radially and axially disposable, and one MEMS sensor means, tangentially or radially disposable, and three piezoelectric sensor means, each orthogonally disposable to each other tangentially and radially and axially.

9. The sensor device according to any one of the claims 1 to 6 or
the sensor arrangement according to claim 7 or 8, wherein
the at least one MEMS sensor means has a measuring range of 0 Hz to 1500 Hz.

10. The sensor device according to any one of the claims 3 to 6 and 9 or
the sensor arrangement according to claim 8 or 9, wherein
the at least one piezoelectric sensor means has a measuring range of 0.05 Hz to 10000 Hz.

11. The sensor device according to any one of the claims 1 to 6, 9 or 10, or
the sensor arrangement according to any one of the claims 7 to 10, comprising a storage unit (30) for storing sensor data of the sensor means and/or a data interface (28) for the wireless and/or wired transfer of sensor data of the sensor means and/or an evaluation means (32) for evaluating the sensor data of the sensor means.

12. A sensor system, comprising
at least one rotatable component and one sensor device (2) according to any one of the claims 1 to 6 or 9 to 11 and/or a sensor arrangement according to any one of the claims 7 to 11, which is/are disposed on the component(s) in a torque-proof manner.

13. A use of the sensor device according to any one of the preceding claims or the sensor arrangement according to any one of the preceding claims while using the measuring signal captured by the at least one MEMS sensor means (26) oriented and/or orientable in a tangential and/or radial direction of the component for determining the rotational speed and/or the rotation angle of the component by means of a sine or cosine-like vibration of the gravitational acceleration measured.

## Revendications

1. Dispositif de capteur pour la saisie d'au moins trois paramètres d'un composant rotatif et à être analysé et configuré pour l'agencement bloqué en rotation sur le composant, le dispositif de capteur comprenant un boîtier (22) et au moins trois moyens de capteur d'accélération disposés dans le boîtier (22), les trois moyens de capteur d'accélération chacun ayant un sens de mesure orthogonal aux deux autres moyens de capteur d'accélération, au moins un des moyens de capteur d'accélération étant configurés comme moyen (26) de MEMS capteur qui est configuré et/ou disponible pour la mesure dans le sens tangentiel et/ou radial du composant, **caractérisé en ce que** le moyen (26) de MEMS capteur est configuré pour la saisie de la vitesse de rotation et/ou de l'angle de rotation du composant au moyen d'une vibration semblable au sinus ou au cosinus de l'accélération mesurée de la pesanteur.

2. Dispositif de capteur selon la revendication 1, dans lequel trois des moyens de capteur d'accélération sont configurés comme moyens de MEMS capteur.

3. Dispositif de capteur selon la revendication 1, comprenant trois moyens de capteur d'accélération, deux des trois moyens de capteur d'accélération orientés orthogonalement l'un à l'autre chacun étant configurés comme moyens de capteur piézoélectriques et étant configurés et/ou disponibles pour la mesure dans le sens radial ou axial du composant.

4. Dispositif de capteur selon la revendication 1, comprenant un quatrième moyen de capteur d'accélération, les trois moyens de capteur d'accélération orientés orthogonalement l'un à l'autre chacun étant configurés comme moyens de capteur piézoélectriques (24_{A}, 24_{R}, 24_{T}) et le quatrième moyen de capteur d'accélération étant configuré comme moyen (26) de MEMS capteur.

5. Dispositif de capteur selon l'une quelconque des revendications précédentes, comprenant au moins un moyen de capteur de distance qui est disposé de préférence dans le boîtier et est configuré et/ou disponible pour la mesure dans le sens radial et/ou axial du composant.

6. Dispositif de capteur selon la revendication 5, comprenant un groupe de moyens de capteur, choisi parmi le groupe comprenant
a) un moyen de capteur de distance, disponible radialement, et trois moyens de MEMS capteur, chacun disponibles disponible orthogonalement l'un à l'autre tangentiellement et radialement et axialement; ou
b) deux moyens de capteur de distance, disponibles radialement et axialement, et trois moyens de MEMS capteur, chacun disponibles disponible orthogonalement l'un à l'autre tangentiellement et radialement et axialement; ou
c) un moyen de capteur de distance, disponible radialement, et un moyen de MEMS capteur, disponible tangentiellement ou radialement, et trois moyens de capteur piézoélectriques, chacun disponibles disponible orthogonalement l'un à l'autre tangentiellement et radialement et axialement; ou
d) deux moyens de capteur de distance, disponibles radialement et axialement, et un moyen de MEMS capteur, disponible tangentiellement ou radialement, et trois moyens de capteur piézoélectriques, chacun disponibles disponible orthogonalement l'un à l'autre tangentiellement et radialement et axialement.

7. Agencement de capteur pour la saisie d'au moins deux paramètres d'un composant rotatif et à être analysé et configuré pour l'agencement bloqué en rotation sur le composant, le dispositif de capteur comprenant un boîtier et au moins un moyen de capteur d'accélération disposé dans le boîtier, le moyen de capteur d'accélération étant configuré comme moyen de MEMS capteur qui est configuré et/ou disponible pour la mesure dans le sens tangentiel et/ou radial du composant, et un moyen de capteur de distance qui est disposé de préférence dans le boîtier et qui est configuré et/ou disponible pour la mesure dans le sens radial et/ou axial, **caractérisé en ce que** le moyen (26) de MEMS capteur est configuré pour la saisie de la vitesse de rotation et/ou de l'angle de rotation du composant au moyen d'une vibration semblable au sinus ou au cosinus de l'accélération mesurée de la pesanteur.

8. Agencement de capteur selon la revendication 7, comprenant un groupe de moyens de capteur, choisi parmi le groupe comprenant
a) un moyen de capteur de distance, disponible radialement, et un moyen de MEMS capteur, disponible tangentiellement ou radialement; ou
b) deux moyens de capteur de distance, disponibles radialement et axialement, et un moyen de MEMS capteur, disponible tangentiellement ou radialement; or
c) un moyen de capteur de distance, disponible radialement, et trois moyens de MEMS capteur, chacun disponibles orthogonalement l'un à l'autre tangentiellement et radialement et axialement; ou
d) deux moyens de capteur de distance, disponibles radialement et axialement, et trois moyens de MEMS capteur, chacun disponibles orthogonalement l'un à l'autre tangentiellement et radialement et axialement; ou
e) un moyen de capteur de distance, disponible radialement, et un moyen de MEMS capteur, disponible tangentiellement ou radialement, et trois moyens de capteur piézoélectriques, chacun disponibles orthogonalement l'un à l'autre tangentiellement et radialement et axialement; ou
f) deux moyens de capteur de distance, disponibles radialement et axialement, et un moyen de MEMS capteur, disponible tangentiellement ou radialement, et trois moyens de capteur piézoélectriques, chacun disponibles orthogonalement l'un à l'autre tangentiellement et radialement et axialement.

9. Dispositif de capteur selon l'une quelconque des revendications 1 à 6, ou agencement de capteur selon la revendication 7 ou la revendication 8, dans lequel l'au moins un moyen de MEMS capteur a une plage de mesure de 0 Hz à 1500 Hz.

10. Dispositif de capteur selon l'une quelconque des revendications 3 à 6 et 9, ou agencement de capteur selon la revendication 8 ou la revendication 9, dans lequel l'au moins un moyen de capteur piézoélectrique a une plage de mesure de 0,05 Hz à 10000 Hz.

11. Dispositif de capteur selon l'une quelconque des revendications 1 à 6, 9 ou la revendication 10,
ou agencement de capteur selon l'une quelconque des revendications 7 à 10, comprenant
une unité de stockage (30) pour le stockage des données de capteur de moyens de capteur et/ou une interface de données (28) pour le transfert sans fil et/ou filé des données de capteur de moyens de capteur et/ou un moyen d'évaluation (32) pour l'évaluation de données de capteur de moyen de capteur.

12. Système de capteur, comprenant
au moins un composant rotatif et un dispositif de capteur (2) selon l'une quelconque des revendications 1 à 6 ou les revendications 9 à 11 et/ou un agencement de capteur selon l'une quelconque des revendications 7 à 11, qui est/sont disposé(s) sure le(s) composant(s) dans une manière d'être bloquée en rotation.

13. Utilisation du dispositif de capteur selon l'une quelconque des revendications précédentes ou de l'agencement de capteur selon l'une quelconque des revendications précédentes en utilisant le signal de mesure saisissant par l'au moins un moyen (26) de MEMS capteur orienté et/ou orientable dans le sens tangentiel et/ou radial du composant pour la détermination de la vitesse de rotation et/ou de l'angle de rotation du composant au moyen d'une vibration semblable au sinus ou cosinus de l'accélération mesurée de la pesanteur.
